# EUROPÄISCHE PATENTSCHRIFT

(11) **EP 3 757 443 B1**
(45) Veröffentlichungstag und Bekanntmachung des Hinweises auf die Patenterteilung: **02.04.2025**
(21) Anmeldenummer: 19182356.6
(22) Anmeldetag: 25.06.2019
(51) Int. Cl.: F16P 3/14, B25J 19/06, G01S 17/93, G08G 1/16, G08G 1/0967

(54) **ÜBERWACHUNGSVORRICHTUNG UND VERFAHREN ZUR ABSICHERUNG VON GEFAHRENBEREICHEN**
MONITORING DEVICE AND METHOD FOR SECURING HAZARDOUS AREAS
ÉLÉMENT DE SURVEILLANCE ET PROCÉDÉ DE SÉCURISATION DE ZONES DANGEREUSES

(43) Veröffentlichungstag der Anmeldung: 30.12.2020
(73) Patentinhaber: Leuze electronic GmbH + Co. KG, 73277 Owen/Teck (DE)
(72) Erfinder: FELLER, Bernhard, 86316 Friedberg (DE); BRUNNER, Rolf, 82223 Eichenau (DE); TIPPMANN, Martin, 73235 Weilheim an der Teck (DE)
(74) Vertreter: Ruckh, Rainer Gerhard

(56) Entgegenhaltungen:
- EP-A1- 3 401 702
- EP-A2- 2 862 767
- CA-A1- 2 810 051
- DE-A1- 102013 210 785
- US-A1- 2005 088 318
- US-A1- 2013 030 688
- US-A1- 2014 309 918
- US-A1- 2017 225 686

## Beschreibung

Die Erfindung betrifft eine Überwachungsvorrichtung und ein Verfahren zur Absicherung von Gefahrenbereichen.

Bekannte Überwachungsvorrichtungen werden zur Gefahrenbereichsüberwachung an Fahrzeugen eingesetzt, die insbesondere als fahrerlose Transportsysteme oder allgemein als autonome, das heißt autonom fahrende Fahrzeuge, ausgebildet sein können. Typischerweise ist an der Frontseite als Bestandteil der Überwachungsvorrichtung ein Sensor angeordnet, mittels dessen das Vorfeld des Fahrzeugs als Gefahrenbereich überwacht wird um Kollisionen ausschließen zu können. Ein hierfür besonders geeigneter Sensor ist ein optischer Sensor in Form eines Flächendistanzsensors, das heißt eines scannenden Distanzsensors.

Mit einem solchen Flächendistanzsensor wird innerhalb eines an den Gefahrenbereich angepassten Schutzfeld eine Objektdetektion durchgeführt. Wird mit dem Flächendistanzsensor ein Objekt im Schutzfeld erkannt, wird mit dem Flächendistanzsensor ein Sicherheitssignal generiert, das an die Fahrzeugsteuerung des Fahrzeugs ausgegeben wird, wodurch das Fahrzeug angehalten wird und somit gefahrenbringende Kollisionen vermieden werden.

Auch ist es bekannt derartige Sensoren, insbesondere Flächendistanzsensoren, an einer stationären Maschine zur Gefahrenbereichsüberwachung einzusetzen.

Die genannten Überwachungsvorrichtungen bilden voneinander völlig unabhängige Einheiten.

Die EP 2 862 767 A1 betrifft ein Kraftfahrzeug, umfassend wenigstens ein Fahrerassistenzsystem, wobei das Kraftfahrzeug in einem ersten Betriebsmodus des Fahrerassistenzsystems durch einen Fahrer steuerbar ist, wobei das Fahrerassistenzsystem ausgebildet ist, bei einem durch Auswertung von das Kraftfahrzeug betreffenden Egodaten und/oder das Kraftfahrzeugumfeld betreffenden Umfelddaten mit einer Wahrscheinlichkeit, die eine vorgegebene Mindestwahrscheinlichkeit übersteigt, ermittelten zukünftigen und/oder einem erfolgten Verlassen der Fahrbahn temporär in einen zweiten Betriebsmodus umzuschalten, in dem die Lenkung des Kraftfahrzeugs ohne Eingriffsmöglichkeit durch den Fahrer autonom durch das Fahrerassistenzsystem erfolgt.

Die US 2013/0030688 A1 betrifft ein Assistenzsystem für ein Fahrzeug. Zudem ist ein Sensor vorgesehen, der Daten über das Verhalten des Fahrzeugs ermittelt. Eine Kommunikationseinheit ermittelt Daten über das Verhalten von anderen Fahrzeugen. Eine weitere Einheit dient zum Abschätzen von Verkehrsbedingungen. Auf der Basis der ermittelten Daten führt das Assistenzsystem Assistenzvorgänge zur Unterstützung des Fahrers des Fahrzeugs durch.

Der Erfindung liegt die Aufgabe zugrunde, eine Überwachungsvorrichtung und ein Verfahren bereitzustellen, mittels derer eine flexible und sichere Gefahrenbereichsüberwachung ermöglicht wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Überwachungsvorrichtung mit mehreren Einrichtungen, von denen wenigstens eine mobil ist, mit den Einrichtungen zugeordneten Steuereinheiten und mit einem Sensor, welcher zur Überwachung eines Gefahrenbereichs ausgebildet ist. Die Überwachungsvorrichtung bildet ein dezentrales, verteiltes System. Den Steuereinheiten und dem Sensor sind Kommunikationsmodule zugeordnet. Anhand von über die Kommunikationsmodule ausgetauschten Informationen können die Steuereinheiten oder der Sensor Überwachungsfunktionalitäten festlegen.

Die Erfindung betrifft weiterhin ein Verfahren zur Absicherung von Gefahrenbereichen.

Der Grundgedanke der Erfindung besteht somit darin, unterschiedliche Einrichtungen beziehungsweise deren Steuereinheiten und den oder die Sensoren, die zur Gefahrenbereichsüberwachung eingesetzt werden, über Kommunikationsmodule zu verbinden, sodass diese Informationen austauschen können. Anhand dieses Informationsaustausches können applikationsspezifisch und entsprechend der durch die Einrichtungen und die Sensoren vorgegebenen Konfiguration Überwachungsfunktionalitäten definiert werden, sodass die Überwachungsvorrichtung die an diese Konfiguration optimal angepassten Sicherheitsfunktionen erfüllt.

Da wenigstens eine der Einrichtungen mobil ist, kann sich die Konfiguration im Laufe der Zeit ändern. Insbesondere ist es möglich, dass eine oder mehrere mobile Einrichtungen mit unterschiedlichen stationären Einrichtungen sowie Sensoren die Überwachungsvorrichtung ausbilden.

Durch die Kommunikation dieser Einheiten untereinander mittels der Kommunikationsmodule ist eine selbsttätige Anpassung an derartige sich verändernde Konfigurationen möglich, sodass die Überwachungsvorrichtung mit ihren Einrichtungen und Sensoren die geforderte Sicherheitsfunktion erfüllen kann.

Ein wesentlicher Vorteil der erfindungsgemäßen Überwachungsvorrichtung besteht darin, dass deren Einrichtungen und Sensoren ein verteiltes System bilden, wobei sich nicht nur die Anordnung dieser Einheiten sondern auch deren Art und Anzahl ändern kann.

Durch die Übertragung von Informationen über die Kommunikationsmodule kann die Art, Anzahl und Anordnung der die Überwachungsvorrichtung bildenden Einrichtungen und Sensoren ermittelt werden. Dadurch können die Überwachungsfunktionalitäten definiert werden, wodurch die Sicherheitsfunktion der Überwachungsvorrichtung festgelegt wird.

Ein weiterer Vorteil der Erfindung besteht darin, dass keine feste zentrale Einheit vorgesehen ist, welche die Sicherheitsfunktion der Überwachungsvorrichtung fest vorgibt. Vielmehr wird in dem dezentralen System abhängig von der jeweiligen Konfiguration und der über die Kommunikationsmodule übertragenen Informationen entschieden, welche Einheit, das heißt welche Einrichtung oder welcher Sensor Überwachungsfunktionalitäten festlegt. Das so gebildete verteilte System kann flexibel auf sich ändernde Konfigurationen reagieren.

Zur Erfüllung der normativen Anforderungen für einen Einsatz im Bereich der Sicherheitstechnik, insbesondere im Bereich des Personenschutzes, bilden die Steuereinheiten der Einrichtungen, der Sensor und die von den Kommunikationsmodulen gebildeten Kommunikationseinrichtungen sicherheitsgerichtete Einheiten aus, das heißt, dass die Steuereinheiten als Sicherheitssteuerungen und die Sensoren als Sicherheitssensoren ausgebildet sind.

Die Steuereinheiten und die Sensoren können hierzu einen fehlersicheren, insbesondere redundanten, zweikanaligen Aufbau aufweisen. Die Kommunikationseinrichtung kann eine fehlersichere Datenübertragung durch eine Absicherung mit Prüfsummen oder dergleichen gewährleisten. Die Kommunikationseinrichtung kann beispielsweise derart ausgebildet sein, dass mit dieser bidirektional Funksignale übertragen werden. Generell können die Kommunikationsmodule leitungsgebunden oder berührungslos eine arbeitende Kommunikationseinrichtung ausbilden.

Vorteilhaft ist der oder ein Sensor ein optischer Sensor oder ein Radarsensor, welcher zur Erfassung von Objekten innerhalb zwei- und/oder dreidimensionaler Schutzfelder ausgebildet ist.

Dabei ist zweckmäßig der Sensor ein Distanzsensor.

Insbesondere ist der optische Sensor ein Flächendistanzsensor oder ein Kamera-Sensor.

Weiterhin kann der optische Sensor auch einen Lichtvorhang ausbilden.

Bei den Einrichtungen kann es sich generell um stationäre oder mobile Einheiten handeln, wobei insbesondere von denen Gefährdungen ausgehen können. Beispielsweise sind die Einrichtungen in Form von Maschinen, Anlagen, Robotern, Fahrzeugen und/oder Gebäudeteilen gebildet.

Als Fahrzeuge können autonome Fahrzeuge, wie zum Beispiel fahrerlose Transportsysteme oder sonstige Transporteinrichtungen vorgesehen sein.

Gemäß einer vorteilhaften Ausführungsform der Erfindung sind die über die Kommunikationsmodule übertragenen Informationen Anforderungen für Gefahrenbereichsüberwachungen.

Abhängig von der Konfiguration der Einrichtungen können Art, Anzahl und Größen von zu überwachenden Gefahrenbereiche festgelegt werden.

Weiterhin werden vorteilhaft mit den über die Kommunikationsmodule übertragenen Informationen Sicherheitslevel vorgegeben.

Derartige Sicherheitslevel ergeben sich aus den geltenden normativen Sicherheitsforderungen.

Dabei kann das Sicherheitslevel auf eine Einrichtung und/oder einen Sensor bezogen sein.

Je nach Gefährdungspotential, das von einer Einrichtung ausgeht, kann ein bestimmtes Sicherheitslevel gefordert werden, um diese Einrichtung hinreichend zu schützen. Für den Sensor kann ein derartiges Sicherheitslevel vorgegeben werden, dass von diesem erfüllt werden muss, um den hinreichenden Schutz zu realisieren.

Gemäß einer vorteilhaften Ausführungsform ist in dem Sensor abhängig von den über die Kommunikationsmodule übertragenen Informationen der Modus einer Gefahrenbereichsüberwachung festgelegt.

Dabei kann, je nach Konfiguration der Überwachungsvorrichtung, die Gefahrenbereichsüberwachung von einen oder mehreren Sensoren durchgeführt werden.

Dabei können aus mehreren Sensoren, die zur Überwachungsvorrichtung gehören, anhand der über die Kommunikationsmodule übertragenen Informationen die Sensoren ausgewählt werden, mit denen die Anforderungen der Gefahrenbereichsüberwachung am besten erfüllt werden können.

Weiterhin können mit den über die Kommunikationsmodule übertragenen Informationen mit dem oder den Sensoren erfasste Schutzfelder vorgegeben werden.

Generell erfolgt mit dem Sensor eine Objekterfassung derart, dass dann, wenn ein Objekteingriff in dem Schutzfeld registriert wird, ein Objektfeststellungssignal generiert wird, mit dem eine Sicherheitsfunktion für eine Einrichtung generiert wird.

In dem Sensor können mehrere Schutzfelder eingespeichert sein oder über entsprechende Steuerbefehle generiert werden. Aus dieser Mehrzahl von Schutzfeldern kann dann anhand der über die Kommunikationsmodule übertragenen Informationen wenigstens ein Schutzfeld ausgewählt und im Sensor aktiviert werden, um die geforderte Gefahrenbereichsüberwachung durchführen zu können.

Generell können auch mit den über die Kommunikationsmodule übertragenen Informationen Zeiträume vorgegeben werden, innerhalb derer Schutzfelder für Sensoren aktiviert werden.

Dies bedeutet, dass je nach Anforderung für die Gefahrenbereichsüberwachung, die auch zeitlich variieren kann, eine Sequenz unterschiedlicher Schutzfelder aktiviert werden kann.

Je nach Ausbildung der Sensoren sind die Schutzfelder ein-, zwei- oder dreidimensionale Bereiche.

So kann mit einem einfachen Distanzsensor ein eindimensionaler Bereich als Schutzfeld überwacht werden, während mit Flächendistanzsensoren und Lichtvorhängen zweidimensionale Bereiche überwacht werden können. Mit Kamera-Sensoren können insbesondere dreidimensionale Bereiche als Schutzfelder überwacht werden.

Gemäß einer vorteilhaften Ausgestaltung enthalten die über die Kommunikationsmodule übertragenen Informationen eine Bewertung, ob ein Gefahrenbereich mit dem oder den Sensoren ausreichend geschützt ist oder nicht.

Insbesondere können die Informationen Bewertungen dahingehend enthalten, ob mit den Sensoren, insbesondere deren Schutzfelder relevante Gefahrenbereiche vollständig oder nur teilweise erfasst werden.

Weiterhin enthalten die über die Kommunikationsmodule übertragenen Informationen eine Bewertung, ob ein Gefahrenbereich mit einem ausreichenden Sicherheitslevel geschützt ist.

Vorteilhaft ist abhängig von über die Kommunikationsmodule übertragenen Informationen der Betrieb einer Einrichtung festgelegt.

Diese Festlegung erfolgt zweckmäßig abhängig von Bewertungen ob im Gefahrenbereich mit den Sensoren ausreichend geschützt werden kann oder nicht.

Insbesondere sind gefahrbringende Prozesse der Einrichtung eingeschränkt oder gesperrt, falls ein gefordertes Sicherheitslevel nicht eingehalten werden kann.

Gemäß einer vorteilhaften Ausgestaltung sind die über die Kommunikationsmodule übertragenen Informationen Referenzinformationen hinsichtlich Geometrien und Zeitinformationen betreffend die Einrichtungen und/oder Sensoren.

So können die Steuereinheiten der Einrichtungen und die Sensoren zeitlich aufgelöst ihre Positionen über die Kommunikationsmodule mitteilen, sodass sich aus den Gesamtinformationen die geometrische Auswertung der gesamten Überwachungsvorrichtung ergibt.

Gemäß einer weiteren vorteilhaften Ausgestaltung sind die über die Kommunikationsmodule übertragenen Informationen Reaktionszeiten von Einrichtungen und/oder Sensoren.

Insbesondere kann es sich hierbei um geforderte Reaktionszeiten für Überwachungsfunktionen für Einrichtungen handeln, die eingehalten werden müssen, um sicherzustellen, dass von den Einrichtungen keine Gefährdungen ausgehen.

Weiterhin kann es sich um von den Sensoren bei der Erfüllung von Sicherheitsfunktionen, insbesondere bei der Durchführung von Schutzfeld-Überwachungen, realisierbare Reaktionszeiten handeln. Durch die Übertragung von geforderten und realisierbaren Reaktionszeiten kann insbesondere eine geeignete Konfiguration von Gefahrenbereichsüberwachung vorgegeben werden.

Weiter vorteilhaft sind die über die Kommunikationsmodule übertragenen Informationen Parameter der Sensoren und/oder Parameter der Einrichtungen.

Damit ist eine selbsttätige Anpassung aller Einheiten der Überwachungsvorrichtung an die geforderte Gefahrenbereichsüberwachung möglich. Derartige Parameter können Minimal- und Maximaldaten sein, die sicher ermittelt werden müssen. Dies können beispielsweise Daten sein, die gefahrbringende Prozesse von Einrichtungen charakterisieren oder auch Leistungsdaten von Sensoren. Typische Sensorparameter können minimal detektierbare Objektgrößen oder weitere Objekteigenschaften wie Reflexionsgrade oder Farben von Objekten sein.

Gemäß einer weiteren vorteilhaften Ausführungsform der Erfindung enthalten die über die Kommunikationsmodule übertragenen Informationen Protokoll- und/oder Syntax-Daten.

Dabei kann eine in einer Einrichtung oder in einem Sensor verwendete Beschreibungssprache an die übertragenen Protokoll- und/oder Syntax-Daten selbsttätig angepasst sein.

Da zur Ausbildung der Überwachungsvorrichtung unterschiedliche Einrichtungen und Sensoren gehören können, besteht allgemein das Problem, dass diese Einheiten unterschiedliche Beschreibungssprachen verwenden, sodass diese über die Kommunikationsmodule Informationen mit entsprechend unterschiedliche Protokollen oder Syntax-Daten übertragen. Dies kann dazu führen, dass Informationen von Einrichtungen oder Sensoren von anderen Einrichtungen oder Sensoren nicht verstanden werden können. Dieses Problem wird durch eine selbsttätige Anpassung der Beschreibungssprachen in den Einrichtungen oder Sensoren gelöst, was zum Beispiel dadurch erreicht wird, dass mehrere Beschreibungssprachen in den Einrichtungen oder Sensoren hinterlegt sind, sodass eine Auswahl aus den Beschreibungssprachen erfolgen kann.

Die Erfindung wird im Folgenden anhand der Zeichnungen erläutert. Es zeigen:
- Figur 1:: Erstes Ausführungsbeispiel der erfindungsgemäßen Überwachungsvorrichtung mit einer mobilen Einrichtung in einer ersten Position.
- Figur 2:: Anordnung gemäß Figur 1 mit der mobilen Einrichtung in einer zweiten Position.
- Figur 3:: Ausführungsbeispiel eines Sensors für die Überwachungsvorrichtung gemäß den Figuren 1 und 2.
- Figur 4:: Fahrzeug mit einem Roboter.
- Figur 5:: Überwachungsvorrichtung mit dem Fahrzeug gemäß Figur 4.
- Figur 6:: Draufsicht auf die Anordnung gemäß Figur 5.
- Figur 7:: Variante der Überwachungsvorrichtung gemäß den Figuren 5 und 6.

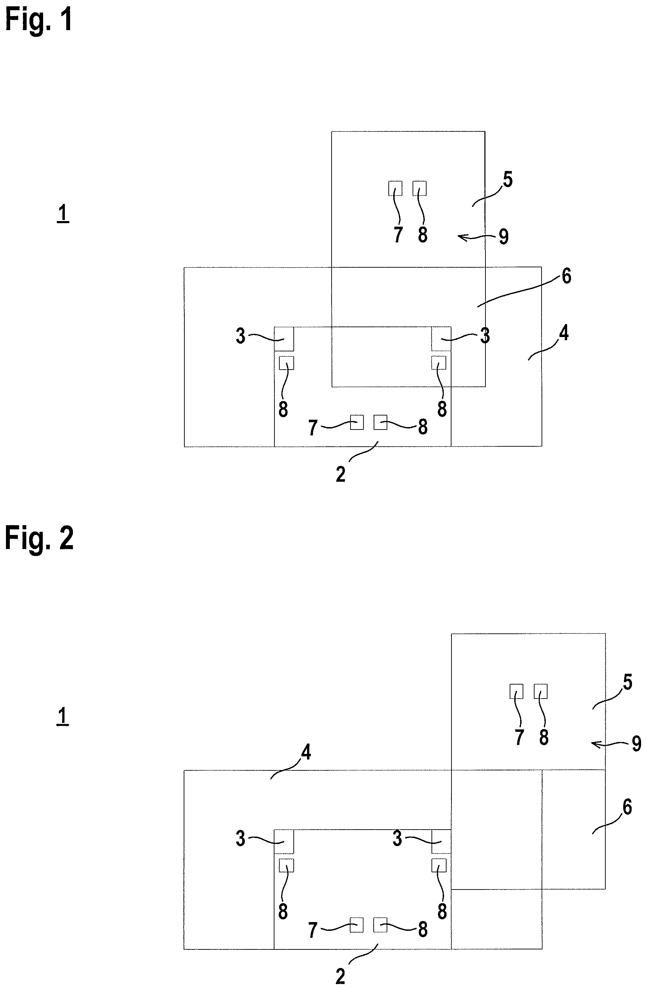

Die Figuren 1 und 2 zeigen ein erstes Ausführungsbeispiel der erfindungsgemäßen Überwachungsvorrichtung 1. Diese umfasst als erste Einrichtung eine stationäre Anlage 2. An der Anlage 2 sind zwei Sensoren 3 vorgesehen, mittels derer ein Schutzfeld 4 überwacht wird, welches das Vorfeld der Anlage 2 umfasst. Als zweite Einrichtung ist eine mobile Transporteinrichtung 5 vorgesehen, deren Vorfeld einen Gefahrenbereich 6 bildet. Sowohl die Anlage 2 als auch die Transporteinrichtung 5 weisen eine Steuereinheit 7 auf, mittels derer der Betrieb der jeweiligen Einrichtung gesteuert wird.

Jeder Steuereinheit 7 und jedem Sensor 3 ist ein Kommunikationsmodul 8 zugeordnet. Die Kommunikationsmodule 8 bilden eine Kommunikationseinrichtung 9 über welche bidirektional Informationen ausgetauscht werden können. Im vorliegenden Fall ist eine berührungslos arbeitende Kommunikationseinrichtung 9 vorgesehen, wobei die Informationen zwischen den Kommunikationsmodulen 8 als Funksignale übertragen werden. Dementsprechend weist jedes Kommunikationsmodul 8 einen Funksender und einen Funkempfänger auf.

Die Überwachungsvorrichtung 1 wird im Bereich der Sicherheitstechnik eingesetzt. Hierzu sind deren Komponenten, insbesondere die Steuereinheit 7, die Kommunikationseinrichtung 9 und die Sensoren 3 als sicherheitsgerichtete Einheiten ausgebildet. Die Steuereinheit 7 kann hierzu aus zwei sich zyklisch überwachenden Rechnereinheiten bestehen. Die Datenübertragung über die Kommunikationseinrichtung 9 kann durch Prüfsummen abgezeichnet sein.

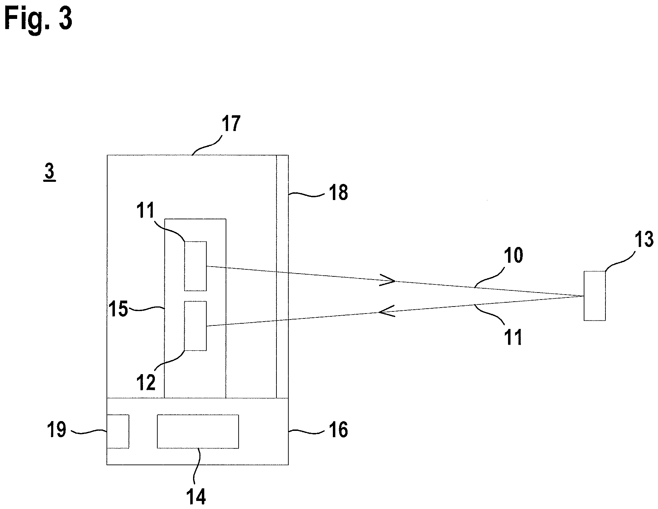

Die optischen Sensoren 3 der Überwachungsvorrichtung 1 sind im vorliegenden Fall als Flächendistanzsensoren ausgebildet. Ein entsprechendes Ausführungsbeispiel zeigt Figur 3. Der dort dargestellte Flächendistanzsensor weist einen Lichtstrahlen 10 emittierenden Sender 11 und einen Lichtstrahlen 10 empfangenden Empfänger 12 auf, die einen nach einem Impuls-Laufzeit-Verfahren arbeitenden Distanzsensor 22 ausbilden. Zur Distanzbestimmung eines Objekts 13 wird in einer Auswerteeinheit 14 die Laufzeit der Lichtstrahlen 10 vom Sender 11 zum Objekt 13 und zurück zum Empfänger 12 bestimmt und in einen Distanzwert umgerechnet. Der Sender 11 und Empfänger 12 sind in einem rotierenden Messkopf 15 angeordnet. Dieser sitzt auf einem stationären Sockel 16 auf, in dem die Auswerteeinheit 14 untergebracht ist. Der motorisch angetriebene Messkopf 15 dreht sich um eine vertikale Drehachse (bezogen auf die Darstellung gemäß Figur 3). Diese Sensorkomponenten sind in einem auf dem Sockel 16 gelagerten Gehäuse 17 angeordnet. Die Lichtstrahlen 10 werden durch ein Fenster 18 im Gehäuse 17 geführt. An die Auswerteeinheit 14 ist ein Schaltausgang 19 für eine Signalausgabe angeschlossen.

Durch die Drehbewegung des Messkopfs 15 werden die Lichtstrahlen 10 in einem in einer horizontalen Ebene liegenden Abtastbereich periodisch abgelenkt.

Der Winkelbereich des Abtastbereichs ergibt sich durch die Ausdehnung des Fensters 18 in Umfangsrichtung des Gehäuses 17.

Durch die fortlaufenden Distanzmessungen und Bestimmung der aktuellen Winkelpositionen der Lichtstrahlen 10 kann eine Positionsbestimmung von Objekten 13 im Abtastbereich durchgeführt werden.

Für den Einsatz im Bereich der Sicherheitstechnik weist die Auswerteeinheit 14 einen redundanten Aufbau in Form zweier sich zyklisch überwachenden Rechnereinheit auf.

Generell können die Sensoren 3 auch als Radarsensoren, Kamera-Sensoren oder Lichtvorhänge ausgebildet sein.

Mit den Sensoren 3 erfolgt generell eine Schutzfeldüberwachung. Die Auswertung erfolgt im jeweiligen optischen Sensor 3 vorzugsweise derart, dass abhängig davon, ob im Schutzfeld 4 ein Objekt 13 erkannt wird oder nicht als Objektfeststellungssignal ein binäres Schaltsignal generiert wird, das heißt die Schaltzustände des Schaltsignals geben an, ob sich ein Objekt 13 im Schutzfeld 4 befindet oder nicht. Das Schaltsignal wird über einen Schaltausgang 19 ausgegeben. Mit dem Schaltsignal, dessen Schaltzustand eine Objektdetektion signalisiert, wird eine Sicherheitsfunktion generiert beziehungsweise ausgelöst, beispielsweise wird der Betrieb der Anlage 2 gestoppt oder die Transporteinrichtung 5 angehalten.

Da mit den Flächendistanzsensoren ein flächiger Abtastbereich abgetastet wird, sind auch die Schutzfelder 4 als Teilflächen des Abtastbereichs flächige Bereiche. Bei einer Ausbildung eines Sensors 3 als Kamera-Sensor können auch dreidimensionale Schutzfelder 4 definiert sein.

In jedem Sensor 3 sind mehrere Schutzfelder 4 abgespeichert oder es können mehrere Schutzfelder 4 in diesen eingegeben werden, sodass je nach Anforderungen im Sensor 3 wenigstens ein Schutzfeld 4 aktiviert werden kann, innerhalb dessen dann Objektdetektionen durchgeführt werden.

Die Funktion der Überwachungsvorrichtung 1 ist generell derart, dass anhand von über die Kommunikationsmodule 8 ausgetauschten Informationen Überwachungsfunktionalitäten festgelegt werden. Dabei werden mit den Informationen einerseits Anforderungen für die mit der Überwachungsvorrichtung 1 durchgeführte Gefahrenbereichsüberwachung festgelegt. Weiterhin ist in dem Sensor 3 abhängig von den über die Kommunikationsmodule 8 übertragenen Informationen der Modus einer Gefahrenbereichsüberwachung festgelegt.

Insbesondere können auch mit den über die Kommunikationsmodule 8 übertragenen Informationen mit dem oder den Sensoren 3 erfasste Schutzfelder 4 vorgegeben werden.

Generell können die Einrichtungen in Form von Maschinen, Anlagen 2, Robotern, Fahrzeugen 20 und/oder Gebäudeteilen gebildet sind. Die über die Kommunikationsmodule 8 übertragenen Informationen enthalten eine Bewertung, ob ein Gefahrenbereich 6 mit einem ausreichenden Sicherheitslevel geschützt ist.

Bei der Überwachungsvorrichtung 1 gemäß den Figuren 1 und 2 kann bei Annäherung der Transporteinrichtung 5 an die Anlage 2 ein Informationsaustausch zwischen diesen Einheiten erfolgen, sodass diese als Komponenten der Überwachungsvorrichtung 1 identifiziert werden können.

Dabei können die über die Kommunikationsmodule 8 übertragenen Informationen Referenzinformationen hinsichtlich Geometrien und Zeitinformationen betreffend die Einrichtungen und/oder Sensoren 3 sein.

Dadurch werden räumliche und zeitliche Bezüge zwischen den Einheiten der Überwachungsvorrichtung 1 kommuniziert.

Auch können die Einheiten der Überwachungsvorrichtung 1 durch Austausch der Informationen über die Kommunikationsmodule 8 parametriert werden.

Abhängig von den übertragenen Informationen wird anhand der übertragenen Informationen der Betrieb der Überwachungsvorrichtung 1 festgelegt.

Bei der Ausführungsform der Figuren 1 und 2 kann die Anlage 2 gefahrbringende Anlagefunktionen ausführen, da das Vorfeld der Anlage 2 mit den Sensoren 3 überwacht wird. Erst wenn die Sensoren 3 einen Objekteingriff feststellen wird als Sicherheitsfunktion der Stopp der Anlage 2 initiiert und zwar in der Steuereinheit 7 der Anlage 2 abhängig von den Schaltsignalen der Sensoren 3.

Bei der Anordnung gemäß Figur 1 liegt die Transporteinrichtung 5 in einer Relativposition zur Anlage 2 derart, dass der Gefahrenbereich 6 vollständig innerhalb der Anlage 2 und dessen Schutzfeld 4 liegt, sodass der gesamte Gefahrenbereich 6 stets überwacht und/oder im Bereich der Anlage 2 nicht zugänglich ist. Daher kann auch die Transporteinrichtung 5 gefahrbringende Funktionen erfüllen, solange von dem Sensor 3 kein Objekt 13 im Gefahrenbereich 6 detektiert wird. Ist dies der Fall, wird die Transporteinrichtung 5 stillgesetzt.

Bei der Anordnung gemäß Figur 2 liegt der Gefahrenbereich 6 teilweise außerhalb der Anlage 2 und dessen Schutzfeld 4, das heißt der Gefahrenbereich wird nicht vollständig überwacht. Da kann in diesem Fall die Transporteinrichtung 5 keine gefahrbringenden Funktionen ausführen.

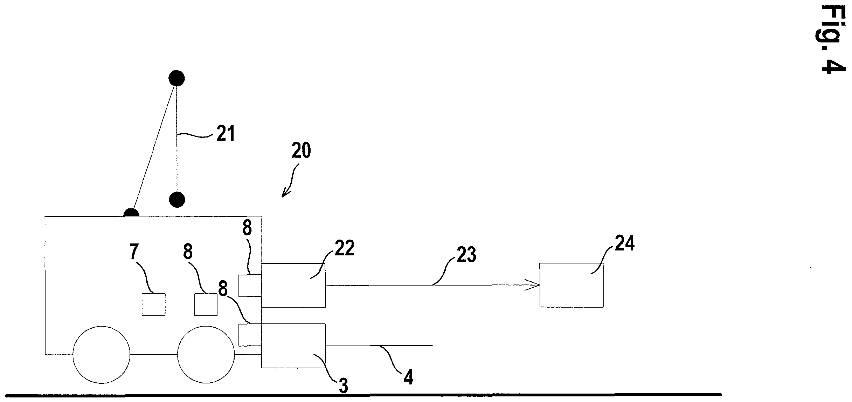

Figur 4 zeigt eine mobile Einrichtung in Form eines Fahrzeugs 20 auf welchem ein beweglicher Roboterarm 21 installiert ist, das heißt das Fahrzeug 20 bildet einen mobilen Roboter.

An der Frontseite des Fahrzeugs 20 ist ein Sensor 3 in Form eines Flächendistanzsensors angeordnet mit dem ein flächiges Schutzfeld 4 überwacht wird.

Weiterhin ist am Fahrzeug 20 eine Positionsmesseinrichtung vorgesehen, die einen Distanzsensor 22 aufweist, dessen Sendelichtstrahlen 23 auf ein kooperatives Ziel 24 geführt werden, um dessen Position zu bestimmen.

Das Fahrzeug 20 wird mittels einer Steuereinheit 7 gesteuert. Der Steuereinheit 7 sowie dem Sensor 3 und dem Distanzsensor 22 sind Kommunikationsmodule 8 zugeordnet.

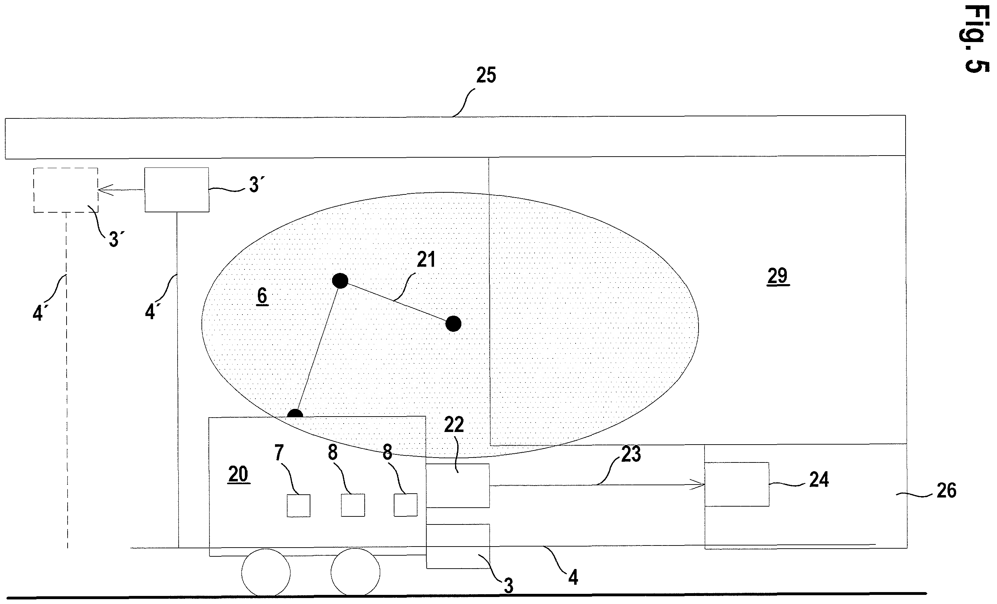

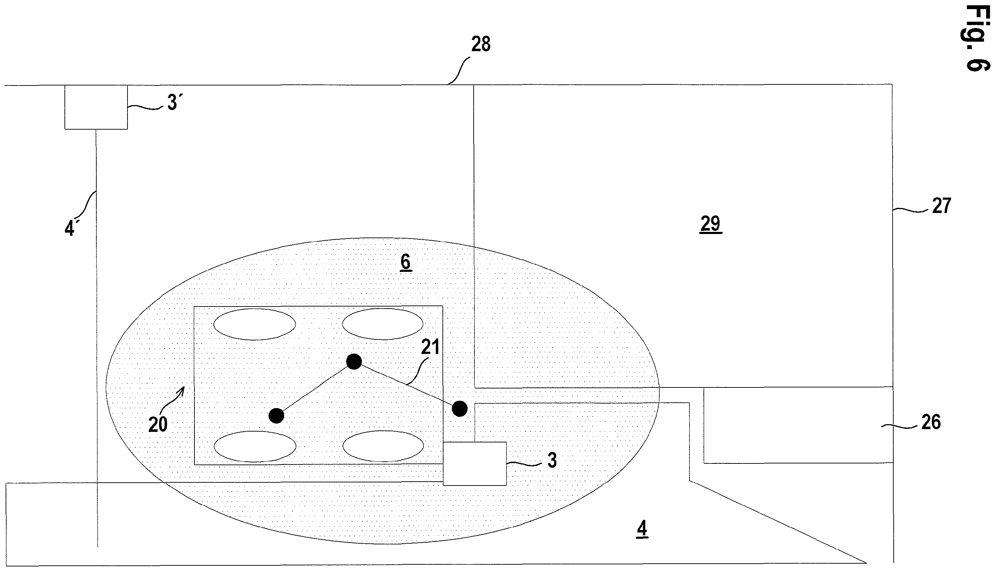

Die Figuren 5 und 6 zeigen ein Beispiel einer Überwachungsvorrichtung 1 mit dem Fahrzeug 20 gemäß Figur 4.

Die Überwachungsvorrichtung 1 weist als Einrichtungen Gebäudeteile, insbesondere eine Decke 25 und Wandelemente 26, 27, 28 auf, die einen Arbeitsraum 29 begrenzen.

Durch die Bewegungen des Roboterarms 21 können innerhalb eines Gefahrenbereichs 6 Gefahren für Personen entstehen. Der Gefahrenbereich 6 wird einerseits durch die Gebäudeteile als seitliche mechanische Abgrenzungen und andererseits durch den Sensor 3 in Form des Flächendistanzsensors am Fahrzeug 20 sowie einen weiteren Sensor 3' in Form eines Flächendistanzsensors oder Lichtvorhangs abgesichert.

Die Position des weiteren Sensors 3' ist veränderbar, wie Figur 5 zeigt, wobei in jedem Fall mit diesem ein vertikales Schutzfeld 4' überwacht wird. Die korrekte Position des Fahrzeugs 20 wird mit dem Distanzsensor 22 überwacht, indem dieser die Position zu einem kooperativen Ziel 24 an einem Wandelement 26 misst.

Der Betrieb der Überwachungsvorrichtung 1 wird abhängig von dem über die Kommunikationsmodule 8 übertragenen Informationen gesteuert. Die Anforderungen für die Gefahrenbereichsüberwachung sind insbesondere durch Sicherheitslevel definiert, die einerseits auf den mobilen Roboter und andererseits auf die Sensoren 3, 3' bezogen sind. Diese Sicherheitslevel werden über die Kommunikationsmodule 8 übertragen. Das Sicherheitslevel für den mobilen Roboter wird zum Beispiel dadurch definiert, dass dieser einen maximalen Aktionsraum und Maximalgeschwindigkeiten einhalten muss. Das Sicherheitslevel der Sensoren 3, 3' ist durch die Art der Objekterkennung definiert, beispielsweise durch Reaktionszeiten oder erfassbare Objektgrößen.

Die über die Kommunikationsmodule 8 übertragenen Informationen enthalten auch Informationen, ob der Gefahrenbereich 6 mit einem ausreichenden Sicherheitslevel abgesichert werden kann. Ist dies der Fall, wird über die Steuereinheit 7 des mobilen Roboters dessen Betrieb uneingeschränkt freigegeben, solange von den Sensoren 3, 3' keine Objekte 13 in den Schutzfeldern 4, 4'detektiert werden. Ein Objekteingriff in einem Schutzfeld 4, 4' würde zu einem Notstopp des mobilen Roboters führen.

Wird nur ein eingeschränktes Sicherheitslevel erreicht, wird der Arbeitsbetrieb nur eingeschränkt freigegeben, beispielsweise derart, dass sich der Roboterarm 21 nur verlangsamt bewegen darf.

Durch die über die Kommunikationsmodule 8 ausgetauschten Informationen werden insbesondere die Schutzfelder 4, 4' selbsttätig angepasst, um den jeweiligen Gefahrenbereich 6 komplett absichern zu können.

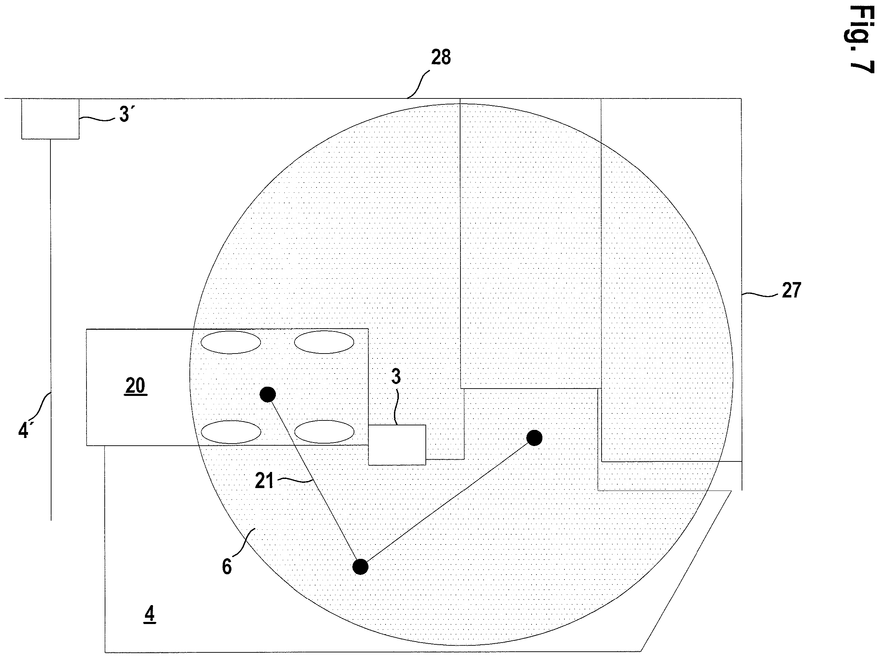

Dies zeigt der Vergleich von Figur 6 mit Figur 7. Figur 7 zeigt eine Variante der Ausführungsform gemäß den Figuren 5 und 6 derart, dass ein größerer mobiler Roboter Bestandteil der Überwachungsvorrichtung 1 ist. Demzufolge ist der Gefahrenbereich 6 auch größer. An den vergrößerten Gefahrenbereich 6 sind auch die Schutzfelder 4, 4' angepasst, wobei zur Anpassung des Schutzfeldes 4' der Sensor 3' an der Decke 25 in geeigneter Weise verschoben werden kann.

### Bezugszeichenliste

- (1): Überwachungsvorrichtung
- (2): Anlage
- (3): Sensor
- (3'): Sensor
- (4): Schutzfeld
- (4'): Schutzfeld
- (5): Transporteinrichtung
- (6): Gefahrenbereich
- (7): Steuereinheit
- (8): Kommunikationsmodul
- (9): Kommunikationseinrichtung
- (10): Lichtstrahl
- (11): Sender
- (12): Empfänger
- (13): Objekt
- (14): Auswerteeinheit
- (15): Messkopf
- (16): Sockel
- (17): Gehäuse
- (18): Fenster
- (19): Schaltausgang
- (20): Fahrzeug
- (21): Roboterarm
- (22): Distanzsensor
- (23): Sendelichtstrahl
- (24): Ziel
- (25): Decke
- (26): Wandelement
- (27): Wandelement
- (28): Wandelement
- (29): Arbeitsraum

## Patentansprüche

1. Überwachungsvorrichtung (1) mit mehreren Einrichtungen, von denen wenigstens eine mobil ist, mit den Einrichtungen zugeordneten Steuereinheiten (7) und mit einem Sensor (3), welcher zur Überwachung eines Gefahrenbereichs (6) ausgebildet ist, **dadurch gekennzeichnet, dass** die Überwachungsvorrichtung (1) ein dezentrales, verteiltes System bildet, dass den Steuereinheiten (7) und dem Sensor (3) Kommunikationsmodule (8) zugeordnet sind, wobei anhand von über die Kommunikationsmodule (8) ausgetauschten Informationen die Steuereinheiten oder der Sensor (3) Überwachungsfunktionalitäten festlegen können.

2. Überwachungsvorrichtung (1) nach Anspruch 1, **dadurch gekennzeichnet, dass** die Steuereinheit (7) als Sicherheitssteuerung und der Sensor (3) als Sicherheitssensor ausgebildet sind.

3. Überwachungsvorrichtung (1) nach einem der Ansprüche 1 oder 2, **dadurch gekennzeichnet, dass** der Sensor (3) ein optischer Sensor oder ein Radarsensor ist, welcher zur Erfassung von Objekten (13) innerhalb zwei- und/oder dreidimensionaler Schutzfelder ausgebildet ist.

4. Überwachungsvorrichtung (1) nach Anspruch 3, **dadurch gekennzeichnet, dass** der optische Sensor (3) ein Flächendistanzsensor, ein Lichtvorhang oder ein Kamera-Sensor ist.

5. Überwachungsvorrichtung (1) nach Anspruch 3, **dadurch gekennzeichnet, dass** der Sensor (3) ein Distanzsensor (22) ist.

6. Überwachungsvorrichtung (1) nach einem der Ansprüche 1 - 5, **dadurch gekennzeichnet, dass** die Einrichtungen in Form von Maschinen, Anlagen (2), Robotern, Fahrzeugen (20) und/oder Gebäudeteilen gebildet sind.

7. Überwachungsvorrichtung (1) nach einem der Ansprüche 1 - 6, **dadurch gekennzeichnet, dass** die Kommunikationsmodule (8) leitungsgebundene oder berührungslos arbeitende Kommunikationseinrichtungen (9) ausbilden.

8. Überwachungsvorrichtung (1) nach einem der Ansprüche 1 - 7, **dadurch gekennzeichnet, dass** die über die Kommunikationsmodule (8) übertragenen Informationen Anforderungen für Gefahrenbereichsüberwachungen sind.

9. Überwachungsvorrichtung (1) nach einem der Ansprüche 1 - 8, **dadurch gekennzeichnet, dass** in dem Sensor (3) abhängig von den über die Kommunikationsmodule (8) übertragenen Informationen der Modus einer Gefahrenbereichsüberwachung festgelegt ist.

10. Überwachungsvorrichtung (1) nach einem der Ansprüche 1 - 9, **dadurch gekennzeichnet, dass** abhängig von den über die Kommunikationsmodule (8) übertragenen Informationen der Modus einer von mehreren Sensoren (3, 3') durchgeführten Gefahrenbereichsüberwachung festgelegt ist.

11. Überwachungsvorrichtung (1) nach einem der Ansprüche 1 - 10, **dadurch gekennzeichnet, dass** mit den über die Kommunikationsmodule (8) übertragenen Informationen mit dem oder den Sensoren (3, 3') erfasste Schutzfelder (4, 4') vorgegeben werden.

12. Überwachungsvorrichtung (1) nach Anspruch 11, **dadurch gekennzeichnet, dass** mit den über die Kommunikationsmodule (8) übertragenen Informationen Zeiträume vorgegeben werden, innerhalb derer Schutzfelder (4, 4') für Sensoren (3, 3') aktiviert sind.

13. Überwachungsvorrichtung (1) nach einem der Ansprüche 11 oder 12, **dadurch gekennzeichnet, dass** die Schutzfelder (4, 4') ein-, zwei- oder dreidimensionale Bereiche sind.

14. Überwachungsvorrichtung (1) nach einem der Ansprüche 1 - 13, **dadurch gekennzeichnet, dass** mit den über die Kommunikationsmodule (8) übertragenen Informationen Sicherheitslevel vorgegeben werden.

15. Überwachungsvorrichtung (1) nach einem der Ansprüche 8 - 14, **dadurch gekennzeichnet, dass** das Sicherheitslevel auf eine Einrichtung und/oder einen Sensor (3, 3') bezogen ist.

16. Überwachungsvorrichtung (1) nach einem der Ansprüche 8 - 15, **dadurch gekennzeichnet, dass** die über die Kommunikationsmodule (8) übertragenen Informationen eine Bewertung enthalten, ob ein Gefahrenbereich (6) mit dem oder den Sensoren (3, 3') ausreichend geschützt ist oder nicht.

17. Überwachungsvorrichtung (1) nach Anspruch 16, **dadurch gekennzeichnet, dass** die über die Kommunikationsmodule (8) übertragenen Informationen eine Bewertung enthalten, ob ein Gefahrenbereich (6) mit einem ausreichenden Sicherheitslevel geschützt ist.

18. Überwachungsvorrichtung (1) nach einem der Ansprüche 8 - 17, **dadurch gekennzeichnet, dass** abhängig von über die Kommunikationsmodule (8) übertragenen Informationen der Betrieb einer Einrichtung festgelegt ist.

19. Überwachungsvorrichtung (1) nach Anspruch 18, **dadurch gekennzeichnet, dass** gefahrbringende Prozesse der Einrichtung eingeschränkt oder gesperrt sind, falls ein gefordertes Sicherheitslevel nicht eingehalten werden kann.

20. Überwachungsvorrichtung (1) nach einem der Ansprüche 8 - 19, **dadurch gekennzeichnet, dass** die über die Kommunikationsmodule (8) übertragenen Informationen Referenzinformationen hinsichtlich Geometrien und Zeitinformationen betreffend die Einrichtungen und/oder Sensoren (3, 3') sind.

21. Überwachungsvorrichtung (1) nach einem der Ansprüche 8 - 20, **dadurch gekennzeichnet, dass** die über die Kommunikationsmodule (8) übertragenen Informationen Reaktionszeiten von Einrichtungen und/oder Sensoren (3, 3') sind.

22. Überwachungsvorrichtung (1) nach einem der Ansprüche 8 - 21, **dadurch gekennzeichnet, dass** die über die Kommunikationsmodule (8) übertragenen Informationen Parameter der Sensoren (3, 3') und/oder Parameter der Einrichtungen sind.

23. Überwachungsvorrichtung (1) nach einem der Ansprüche 8 - 22, **dadurch gekennzeichnet, dass** die über die Kommunikationsmodule (8) übertragenen Informationen Protokoll- und/oder Syntax-Daten enthalten.

24. Überwachungsvorrichtung (1) nach Anspruch 23, **dadurch gekennzeichnet, dass** eine in einer Einrichtung oder in einem Sensor (3, 3') verwendete Beschreibungssprache an die übertragenen Protokoll- und/oder Syntax-Daten selbsttätig angepasst ist.

25. Verfahren zur Absicherung von Gefahrenbereichen (6) mittels einer Überwachungsvorrichtung (1), mit mehreren Einrichtungen, von denen wenigstens eine mobil ist, mit den Einrichtungen zugeordneten Steuereinheiten (7) und mit einem Sensor (3), welcher zur Überwachung eines Gefahrenbereichs (6) ausgebildet ist, **dadurch gekennzeichnet, dass** die Überwachungsvorrichtung (1) ein dezentrales, verteiltes System bildet, dass den Steuereinheiten (7) und dem Sensor (3) Kommunikationsmodule (8) zugeordnet sind, wobei anhand von über die Kommunikationsmodule (8) ausgetauschten Informationen die Steuereinheiten oder der Sensor (3) Überwachungsfunktionalitäten festlegen können.

## Claims

1. A monitoring device (1) with several devices, at least one of which is mobile, with control units (7) assigned to the devices and with a sensor (3) which is designed to monitor a hazardous zone (6), **characterised in that** the monitoring device (1) forms a decentralised, distributed system, **in that** the control units (7) and the sensor (3) are assigned communication modules (8), the control units or the sensor (3) being able to define monitoring functionalities on the basis of information exchanged via the communication modules (8).

2. A monitoring device (1) according to claim 1, **characterised in that** the control unit (7) is designed as a safety controller and the sensor (3) is designed as a safety sensor.

3. A monitoring device (1) according to one of claims 1 or 2, **characterised in that** the sensor (3) is an optical sensor or a radar sensor, which is designed to detect objects (13) within two- and/or three-dimensional protective fields.

4. A monitoring device (1) according to claim 3, **characterised in that** the optical sensor (3) is an area distance sensor, a light curtain or a camera sensor.

5. A monitoring device (1) according to claim 3, **characterised in that** the sensor (3) is a distance sensor (22).

6. A monitoring device (1) according to one of claims 1 to 5, **characterised in that** the devices are formed in the form of machines, systems (2), robots, vehicles (20) and/or building parts.

7. A monitoring device (1) according to one of claims 1 to 6, **characterised in that** the communication modules (8) form wired or contactless communication devices (9).

8. A monitoring device (1) according to one of claims 1 to 7, **characterised in that** the information transmitted via the communication modules (8) are requirements for hazardous area monitoring.

9. A monitoring device (1) according to one of claims 1 to 8, **characterised in that** the mode of hazardous zone monitoring is defined in the sensor (3) depending on the information transmitted via the communication modules (8).

10. A monitoring device (1) according to one of claims 1 to 9, **characterised in that** the mode of hazardous zone monitoring carried out by a plurality of sensors (3, 3') is determined as a function of the information transmitted via the communication modules (8).

11. A monitoring device (1) according to one of claims 1 to 10, **characterised in that** protective fields (4, 4') detected with the sensor or sensors (3, 3') are predetermined with the information transmitted via the communication modules (8).

12. A monitoring device (1) according to claim 11, **characterised in that** the information transmitted via the communication modules (8) is used to specify time periods within which protective fields (4, 4') for sensors (3, 3') are activated.

13. A monitoring device (1) according to one of claims 11 or 12, **characterised in that** the protective fields (4, 4') are one-, two- or three-dimensional areas.

14. A monitoring device (1) according to one of claims 1 to 13, **characterised in that** the information transmitted via the communication modules (8) is used to specify security levels.

15. A monitoring device (1) according to one of claims 8 to 14, **characterised in that** the safety level is related to a device and/or a sensor (3, 3').

16. A monitoring device (1) according to one of claims 8 to 15, **characterised in that** the information transmitted via the communication modules (8) contains an assessment of whether or not a hazardous zone (6) with the sensor or sensors (3, 3') is sufficiently protected.

17. A monitoring device (1) according to claim 16, **characterised in that** the information transmitted via the communication modules (8) contains an assessment of whether a hazardous zone (6) is protected with a sufficient security level.

18. A monitoring device (1) according to one of claims 8 to 17, **characterised in that** the operation of a device is determined depending on information transmitted via the communication modules (8).

19. A monitoring device (1) according to claim 18, **characterised in that** hazardous processes of the device are restricted or blocked if a required safety level cannot be maintained.

20. A monitoring device (1) according to one of claims 8 to 19, **characterised in that** the information transmitted via the communication modules (8) is reference information regarding geometries and time information concerning the devices and/or sensors (3, 3').

21. A monitoring device (1) according to one of claims 8 to 20, **characterised in that** the information transmitted via the communication modules (8) are response times of devices and/or sensors (3, 3').

22. A monitoring device (1) according to one of claims 8 to 21, **characterised in that** the information transmitted via the communication modules (8) are parameters of the sensors (3, 3') and/or parameters of the devices.

23. A monitoring device (1) according to one of claims 8 to 22, **characterised in that** the information transmitted via the communication modules (8) contains protocol and/or syntax data.

24. A monitoring device (1) according to claim 23, **characterised in that** a description language used in a device or in a sensor (3, 3') is automatically adapted to the transmitted protocol and/or syntax data.

25. A method for safeguarding hazardous zones (6) by means of a monitoring device (1), having a plurality of devices, at least one of which is mobile, having control units (7) assigned to the devices and having a sensor (3) which is designed to monitor a hazardous zone (6), **characterised in that** the monitoring device (1) forms a decentralised, distributed system, **in that** communication modules (8) are assigned to the control units (7), wherein the control units or the sensor (3) can determine monitoring functionalities on the basis of information exchanged via the communication modules (8).

## Revendications

1. Dispositif de surveillance (1) comportant plusieurs dispositifs, dont au moins un est mobile, avec des unités de commande (7) affectées aux dispositifs et avec un capteur (3) conçu pour surveiller une zone dangereuse (6), **caractérisé en ce que** le dispositif de surveillance (1) forme un système décentralisé et distribué, **en ce que** les unités de commande (7) et le capteur (3) sont dotés de modules de communication (8), les unités de commande ou le capteur (3) pouvant définir des fonctionnalités de surveillance sur la base des informations échangées par l'intermédiaire des modules de communication (8).

2. Dispositif de surveillance (1) selon la revendication 1, **caractérisé par le fait que** l'unité de commande (7) est conçue comme un contrôleur de sécurité et que le capteur (3) est conçu comme un capteur de sécurité.

3. Dispositif de surveillance (1) selon l'une des revendications 1 ou 2, **caractérisé par le fait que** le capteur (3) est un capteur optique ou un capteur radar conçu pour détecter des objets (13) dans des champs de protection bidimensionnels et/ou tridimensionnels.

4. Dispositif de surveillance (1) selon la revendication 3, **caractérisé par le fait que** le capteur optique (3) est un capteur de distance, un rideau lumineux ou un capteur de caméra.

5. Dispositif de surveillance (1) selon la revendication 3, **caractérisé par le fait que** le capteur (3) est un capteur de distance (22).

6. Dispositif de surveillance (1) selon l'une des revendications 1 à 5, **caractérisé par le fait que** les dispositifs se présentent sous la forme de machines, de systèmes (2), de robots, de véhicules (20) et/ou d'éléments de construction.

7. Dispositif de surveillance (1) selon l'une des revendications 1 à 6, **caractérisé par le fait que** les modules de communication (8) forment des dispositifs de communication câblés ou sans contact (9).

8. Dispositif de surveillance (1) selon l'une des revendications 1 à 7, **caractérisé par le fait que** les informations transmises par les modules de communication (8) sont des exigences pour la surveillance des zones dangereuses.

9. Dispositif de surveillance (1) selon l'une des revendications 1 à 8, **caractérisé par le fait que** le mode de surveillance de la zone dangereuse est défini dans le capteur (3) en fonction des informations transmises par les modules de communication (8).

10. Dispositif de surveillance (1) selon l'une des revendications 1 à 9, **caractérisé par le fait que** le mode de surveillance de la zone dangereuse effectué par une pluralité de capteurs (3, 3') est déterminé en fonction des informations transmises par les modules de communication (8).

11. Dispositif de surveillance (1) selon l'une des revendications 1 à 10, **caractérisé par le fait que** les champs de protection (4, 4') détectés par le ou les capteurs (3, 3') sont prédéterminés à l'aide des informations transmises par les modules de communication (8).

12. Dispositif de surveillance (1) selon la revendication 11, **caractérisé par le fait que** les informations transmises par l'intermédiaire des modules de communication (8) sont utilisées pour spécifier les périodes de temps au cours desquelles les champs de protection (4, 4') des capteurs (3, 3') sont activés.

13. Dispositif de surveillance (1) selon l'une des revendications 11 ou 12, **caractérisé par le fait que** les champs de protection (4, 4') sont des zones unidimensionnelles, bidimen-sionnelles ou tridimensionnelles.

14. Dispositif de surveillance (1) selon l'une des revendications 1 à 13, **caractérisé par le fait que** les informations transmises par les modules de communication (8) sont utilisées pour spécifier les niveaux de sécurité.

15. Dispositif de surveillance (1) selon l'une des revendications 8 à 14, **caractérisé par le fait que** le niveau de sécurité est lié à un dispositif et/ou à un capteur (3, 3').

16. Dispositif de surveillance (1) selon l'une des revendications 8 à 15, **caractérisé par le fait que** les informations transmises par les modules de communication (8) contiennent une évaluation permettant de déterminer si une zone dangereuse (6) avec le ou les capteurs (3, 3') est suffisamment protégée.

17. Dispositif de surveillance (1) selon la revendication 16, **caractérisé par le fait que** les informations transmises par l'intermédiaire des modules de communication (8) contiennent une évaluation permettant de déterminer si une zone dangereuse (6) est protégée avec un niveau de sécurité suffisant.

18. Dispositif de surveillance (1) selon l'une des revendications 8 à 17, **caractérisé par le fait que** le fonctionnement d'un dispositif est déterminé en fonction des informations transmises par les modules de communication (8).

19. Dispositif de surveillance (1) selon la revendication 18, **caractérisé par le fait que** les processus dangereux du dispositif sont restreints ou bloqués si un niveau de sécurité requis ne peut être maintenu.

20. Dispositif de surveillance (1) selon l'une des revendications 8 à 19, **caractérisé par le fait que** les informations transmises par l'intermédiaire des modules de communication (8) sont des informations de référence concernant les géométries et les informations de temps concernant les dispositifs et/ou les capteurs (3, 3').

21. Dispositif de surveillance (1) selon l'une des revendications 8 à 20, **caractérisé par le fait que** les informations transmises par l'intermédiaire des modules de communication (8) sont des temps de réponse des dispositifs et/ou des capteurs (3, 3').

22. Dispositif de surveillance (1) selon l'une des revendications 8 à 21, **caractérisé par le fait que** les informations transmises par l'intermédiaire des modules de communication (8) sont des para-mètres des capteurs (3, 3') et/ou des paramètres des appareils.

23. Dispositif de surveillance (1) selon l'une des revendications 8 à 22, **caractérisé par le fait que** les informations transmises par les modules de communication (8) contiennent des données de protocole et/ou de syntaxe.

24. Dispositif de surveillance (1) selon la revendication 23, **caractérisé par le fait qu'**un langage de description utilisé dans un dispositif ou dans un capteur (3, 3') est automatiquement adapté au protocole transmis et/ou aux données syntaxiques.

25. Procédé de protection de zones dangereuses (6) au moyen d'un dispositif de surveillance (1) comportant plusieurs dispositifs, dont au moins un est mobile, des unités de commande (7) affectées aux dispositifs et un capteur (3) conçu pour surveiller une zone dangereuse (6), **caractérisé en ce que** le dispositif de surveillance (1) forme un système décentralisé et distribué, **en ce que** des modules de communication (8) sont affectés aux unités de commande (7), les unités de commande ou le capteur (3) pouvant déterminer des fonctionnalités de surveillance sur la base d'informations échangées par l'intermédiaire des modules de communication (8).
